# EUROPEAN PATENT APPLICATION

(11) **EP 4 216 190 A1**
(43) Date of publication of application: **26.07.2023**
(21) Application number: 21869039.4
(22) Date of filing: 27.07.2021
(51) Int. Cl.: G08G 1/16

(54) **DRIVING ASSISTANCE DEVICE**

(30) Priority: 16.09.2020 JP 2020155056
(71) Applicant: Hitachi Astemo, Ltd., Ibaraki 312-8503 (JP)
(72) Inventor: HOASHI Kouichi, Hitachinaka-shi, Ibaraki 312-8503 (JP)
(74) Representative: MERH-IP Matias Erny Reichl Hoffmann Patentanwälte PartG mbB
(86) International application number: PCT/JP2021/027679
(87) International publication number: WO 2022/059352

(57) **Abstract**

Provided is a driving assistance device capable of ensuring safety by allowing an opposite lane to be always seen from a time of entering an intersection to a start of executing a right/left turn and enabling the right/left turn at the intersection without missing a right/left turn execution opportunity. An own vehicle C is caused to stand by at a standby position Cb which allows detecting a following vehicle D of the own vehicle C by a rear side sensor and determining whether or not an oncoming right/left-turn standby vehicle E is capable of a right/left turn. In a case where it is determined that the oncoming right/left-turn standby vehicle E crosses the intersection and turns right or left, and the own vehicle C is capable of crossing the intersection and turning right or left, a right/left turn of the own vehicle C is started.

## Description

### Technical Field

The present invention relates to a driving assistance device that assists driving of a vehicle.

### Background Art

A driving assistance device is proposed in which, in a scene where a vehicle crosses an opposite lane and makes a right/left turn at an intersection, while standing by for the right/left turn, the own vehicle can be caused to stand by for the right/left turn at a position obtained by considering a risk and efficiency in the case of making the right/left turn according to a degree of a blind spot of a sensor by a vehicle standing by for a right/left turn from the opposite lane (see PTL 1).

### Citation List

### Patent Literature

PTL 1: WO 2016/027351 A

### Summary of Invention

### Technical Problem

However, the technique described in PTL 1 has a problem that, for example, the standby position is not corrected while standing by in front until there is no oncoming right-turn standby vehicle, line, and the standby position is corrected before the determination on whether or not it is possible to turn right or cross. Thus, even when a right turn cannot be made after the correction, and then a blind spot occurs, readjustment cannot be performed, so that there is a possibility that an opportunity to execute a right/left turn is lost, which is problematic.

In view of the above problems, an object of the present invention is to provide a driving assistance device capable of ensuring safety by allowing an opposite lane to be always seen from a time of entering an intersection to a start of executing a right/left turn and enabling the right/left turn at the intersection without missing a right/left turn execution opportunity.

### Solution to Problem

In a driving assistance device according to one aspect of the present invention, presence of an oncoming right/left-turn standby vehicle, on an opposite lane, standing by for a right/left turn crossing an intersection is determined, a track of the right/left turn of the oncoming right/left-turn standby vehicle is assumed based on a size of the intersection, an own vehicle is caused to stand by at a standby position which allows detecting a following vehicle of the own vehicle by a rear side sensor and determining whether or not the oncoming right/left-turn standby vehicle is capable of a right/left turn, and in a case where it is determined that the oncoming right/left-turn standby vehicle crosses the intersection and turns right or left, and the own vehicle is capable of crossing the intersection and turning right or left, a right/left turn of the own vehicle is started.

### Advantageous Effects of Invention

According to the present invention, it is possible to ensure safety by allowing an opposite lane to be always seen from a time of entering an intersection to a start of executing a right/left turn and enable the right/left turn at the intersection without missing a right/left turn execution opportunity, for example, with a low-cost sensor configuration for driving assistance.

Problems, configurations, and effects other than those described above will be clarified by the following description of embodiments.

### Brief Description of Drawings

[FIG. 1] FIG. 1 is a block diagram illustrating a basic configuration of a driving assistance device according to an embodiment of the present invention.
[FIG. 2] FIG. 2 is a state transition diagram for describing an operation of the driving assistance device according to the embodiment of the present invention.
[FIG. 3] FIG. 3 is a diagram for describing transition conditions in the state transition diagram of FIG. 2.
[FIG. 4] FIG. 4 is a diagram for describing the operation of the driving assistance device according to the embodiment of the present invention.
[FIG. 5] FIG. 5 is a diagram for describing the operation of the driving assistance device according to the embodiment of the present invention.
[FIG. 6] FIG. 6 is a diagram for describing the operation of the driving assistance device according to the embodiment of the present invention.
[FIG. 7] FIG. 7 is a diagram for describing the operation of the driving assistance device according to the embodiment of the present invention.
[FIG. 8] FIG. 8 is a diagram for describing the operation of the driving assistance device according to the embodiment of the present invention.
[FIG. 9] FIG. 9 is a diagram for describing a collision determination necessary line-of-sight distance of the driving assistance device according to the embodiment of the present invention.
[FIG. 10] FIG. 10 is a flowchart for describing the operation of the driving assistance device according to the embodiment of the present invention.

### Description of Embodiments

Hereinafter, embodiments of the present invention will be described with reference to the drawings. In the following description of the drawings, the same or similar parts are denoted by the same or similar reference numerals, and redundant description is omitted.

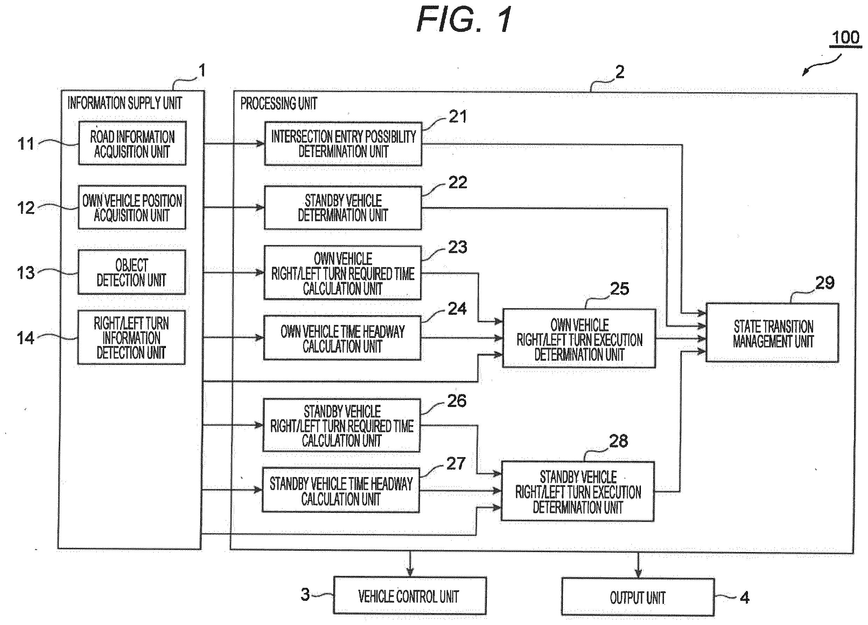

As illustrated in FIG. 1, a driving assistance device 100 according to an embodiment of the present invention includes an information supply unit 1, a processing unit 2 that is supplied with various types of information by the information supply unit 1 and processes calculation necessary for the operation of the driving assistance device 100, a vehicle control unit 3, and an output unit 4. The driving assistance device 100 according to the embodiment is mounted on a vehicle and assists driving when an own vehicle C turns right or left. The own vehicle C may be an automatic driving vehicle that automatically drives a set travel route, or may be a vehicle that travels according to the operation of a driver.

The information supply unit 1 includes a road information acquisition unit 11, an own vehicle position acquisition unit 12, an object detection unit 13, and a right/left turn information detection unit 14. The road information acquisition unit 11 acquires road information allowing the own vehicle C to travel, and outputs the road information to the processing unit 2. The road information acquisition unit 11 includes, for example, a car navigation device that holds a digital map as the road information. The road information includes a width of a road, a radius of curvature, a size of an intersection, the number of lanes, an exit direction of an intersection entry lane, a type, a legal speed, and the like.

The own vehicle position acquisition unit 12 acquires the current position of the own vehicle C in the road information acquired by the road information acquisition unit 11. The own vehicle position acquisition unit 12 includes a positioning device such as a global positioning system (GPS) receiver, a gyro sensor, a steering angle sensor, and a vehicle speed sensor. The own vehicle position acquisition unit 12 complements the position acquired by the positioning device with detection results of external recognition sensors such as a gyro sensor, a steering angle sensor, a vehicle speed sensor, and a camera, and the road information, and acquires the result as the current position of the own vehicle C.

The object detection unit 13 detects an object around the own vehicle C. The object detection unit 13 includes, for example, an external recognition sensor such as a camera or a radar having an angular resolution and a distance resolution. The object detection unit 13 includes a rear side sensor that detects a rear side object (such as following vehicles such as straight-traveling vehicles and left-turn vehicles) of the own vehicle C described later.

Based on the current position and the travel route of the own vehicle C in the road information acquired by the road information acquisition unit 11, the right/left turn information detection unit 14 detects right/left turn information indicating that the own vehicle C crosses the opposite lane (crosses the intersection) and makes a right/left turn at the intersection after a predetermined time. The right/left turn information detection unit 14 may include, for example, the same car navigation device as the road information acquisition unit 11. In the car navigation device, a user sets the travel route on a digital map as road information in advance. In addition, the right/left turn information detection unit 14 may detect the right/left turn information by a blinker operation of the driver.

The processing unit 2 includes an intersection entry possibility determination unit 21, a standby vehicle determination unit 22, an own vehicle right/left turn required time calculation unit 23, an own vehicle time headway calculation unit 24, an own vehicle right/left turn execution determination unit 25, a standby vehicle right/left turn required time calculation unit 26, a standby vehicle time headway calculation unit 27, a standby vehicle right/left turn execution determination unit 28, and a state transition management unit 29. Each unit configuring the processing unit 2 is a display as a logical structure, and may be configured as integrated hardware or may be configured as separate hardware.

When the right/left turn information is detected by the right/left turn information detection unit 14, the intersection entry possibility determination unit 21 determines whether or not the own vehicle C can enter the intersection. For example, in the object detection unit 13 such as a camera that functions as a signal detection unit that detects a traffic light at an intersection and a signal displayed on the traffic light, when the display of the signal indicates that the own vehicle C can enter the intersection and there is no obstacle in front of the own vehicle C, it is determined that the own vehicle C can enter the intersection.

When the right/left turn information is detected by the right/left turn information detection unit 14, the standby vehicle determination unit 22 determines whether or not there is a standby vehicle (oncoming right/left-turn standby vehicle) E that stands by at an intersection indicated by the right/left turn information for the right/left turn from the opposite lane. Based on the detection result of the object detection unit 13 and the road information acquired by the road information acquisition unit 11, the standby vehicle determination unit 22 determines whether or not there is the standby vehicle E. The standby vehicle determination unit 22 recognizes the standby vehicle E by allocating the detection result of the object detection unit 13 to the digital map of the road information acquisition unit 11 by using the current position of the own vehicle C. Note that the standby vehicle E includes, for example, a right/left-turn standby vehicle having entered an intersection, a vehicle having entered an intersection and traveling on a right/left-turn lane, and a vehicle displaying (for example, blinker display) a right/left turn before entering an intersection.

Based on the road information acquired by the road information acquisition unit 11, the own vehicle right/left turn required time calculation unit 23 calculates a required time (own vehicle right/left turn required time) Tb required for the own vehicle C to start and complete a right/left turn from a right/left-turn standby position Cb. The right/left-turn standby position Cb where the own vehicle C stands by is a position where it is possible to see a collision determination necessary line-of-sight distance used to calculate the possibility of collision between the own vehicle C and an oncoming straight-traveling vehicle or an oncoming right/left-turn vehicle (a, left-turn vehicle when the own vehicle C turns right, a right-turn vehicle when the own vehicle turns left) F on the opposite lane in a case where the own vehicle C turns right or left and cross at an intersection on the opposite lane, and it is possible to detect the following vehicle D of the own vehicle C by a rear side sensor as the object detection unit 13 and determine whether or not the oncoming right/left-turn standby vehicle E can turn right or left (see FIGS.. 4 and 9). The collision determination necessary line-of-sight distance depends on a size of an intersection based on road information and a legal speed. Note that the following vehicle D of the own vehicle C includes, for example, a straight-traveling vehicle from the rear side of the own vehicle C and a vehicle that turns in a direction opposite to the own vehicle C (turns left when the own vehicle C turns right and turns right when the own vehicle C turns left) from the rear side of the own vehicle C. The own vehicle right/left turn required time calculation unit 23 calculates the required time Tb based on the size of the intersection indicated by the right/left turn information detected by the right/left turn information detection unit 14 and the turning curvature of the own vehicle C. The required time Tb is a time from when the own vehicle C starts turning right or left until the own vehicle C reaches a position where the own vehicle C does not hinder the movement of an object (another vehicle) moving in the intersection.

The own vehicle time headway calculation unit 24 calculates a time headway (THW) Ta for an oncoming straight-traveling vehicle or an oncoming right/left-turn vehicle (a left-turn vehicle when the own vehicle C turns right, a right-turn vehicle when the own vehicle turns left) F on the opposite lane until the own vehicle C enters the intersection indicated by the right/left turn information detected by the right/left turn information detection unit 14. The own vehicle time headway calculation unit 24 recognizes the position of the oncoming straight-traveling vehicle or the oncoming right/left-turn vehicle F by allocating the detection result of the object detection unit 13 to the digital map of the road information acquisition unit 11 by using the current position of the own vehicle C.

The own vehicle right/left turn execution determination unit 25 determines whether or not the own vehicle C can cross the intersection from the standby position Cb and turn right or left based on the calculation result of the own vehicle right/left turn required time calculation unit 23, the calculation result of the own vehicle time headway calculation unit 24, the road information, the current position of the own vehicle C, and the detection result of the object detection unit 13 regarding a surrounding situation such as an obstacle around the own vehicle C and a pedestrian on a crosswalk ahead of crossing. For example, it is determined whether or not the oncoming straight-traveling vehicle reaches the intersection from the standby position Cb of the own vehicle C within the required time Tbx based on the position of the oncoming straight-traveling vehicle closest to the intersection and the legal speed of the opposite lane, thereby determining whether or not the own vehicle C can cross the intersection from the standby position Cb and turn right or left.

Based on the road information acquired by the road information acquisition unit 11, the standby vehicle right/left turn required time calculation unit 26 calculates a required time (standby vehicle right/left turn required time) Te required for the oncoming right/left-turn standby vehicle E to start and complete a right/left turn from the right/left-turn standby position. At this time, the standby vehicle right/left turn required time calculation unit 26 calculates the required time Te assuming the track of the right/left turn of the standby vehicle E based on the size of the intersection indicated by the road information. The required time Te is a time from when the standby vehicle E starts turning right or left until the standby vehicle E reaches a position that the standby vehicle E does not hinder the movement of an object (another vehicle) moving in the intersection.

The standby vehicle time headway calculation unit 27 calculates a time headway (THW) . Td of the standby vehicle E with respect to the following vehicle D of the own vehicle C. The standby vehicle time headway calculation unit 27 calculates the time headway Td by using the current position of the own vehicle C, the position of the standby vehicle E based on the detection result of the object detection unit 13, and the position and speed of the following vehicle D of the own vehicle C detected by the rear side sensor.

The standby vehicle right/left turn execution determination unit 28 determines whether or not the standby vehicle E can cross the intersection from the standby position and turn right or left based on the calculation result of the standby vehicle right/left turn required time calculation unit 26, the calculation result of the standby vehicle time headway calculation unit 27, the road information, the current position of the standby vehicle E, and the detection result of the object detection unit 13 regarding a surrounding situation such as an obstacle around the standby vehicle E and a pedestrian on a crosswalk ahead of crossing. For example, whether or not the following vehicle D of the own vehicle C reaches the intersection from the standby position of the standby vehicle E within the required time Tex is determined based on the position and speed of the following vehicle D of the own vehicle C, whereby it is determined whether or not the standby vehicle E can cross the intersection from the standby position and turn right or left.

The state transition management unit 29 manages the state transition of the own vehicle C at the time of right/left turn at the intersection based on the determination results of the intersection entry possibility determination unit 21, the standby vehicle determination unit 22, the own vehicle right/left turn execution determination unit 25, and the standby vehicle right/left turn execution determination unit 28 (described later).

The vehicle control unit 3 includes a drive unit (such as an internal combustion engine.and a motor) that drives the own vehicle C in a front-rear direction, a brake that brakes the own vehicle C, a steering that changes the traveling direction of the own vehicle C, and the like. The vehicle control unit 3 controls the operation of the own vehicle C according to the control of (the state transition management unit 29 of) the processing unit 2.

The output unit 4 notifies the user of various types of information according to the control of (the state transition management unit 29 of) the processing unit 2. The output unit 4 includes, for example, a display device that displays light, images, characters, and the like, and an output device such as a speaker that outputs voice.

### -Driving assistance method-

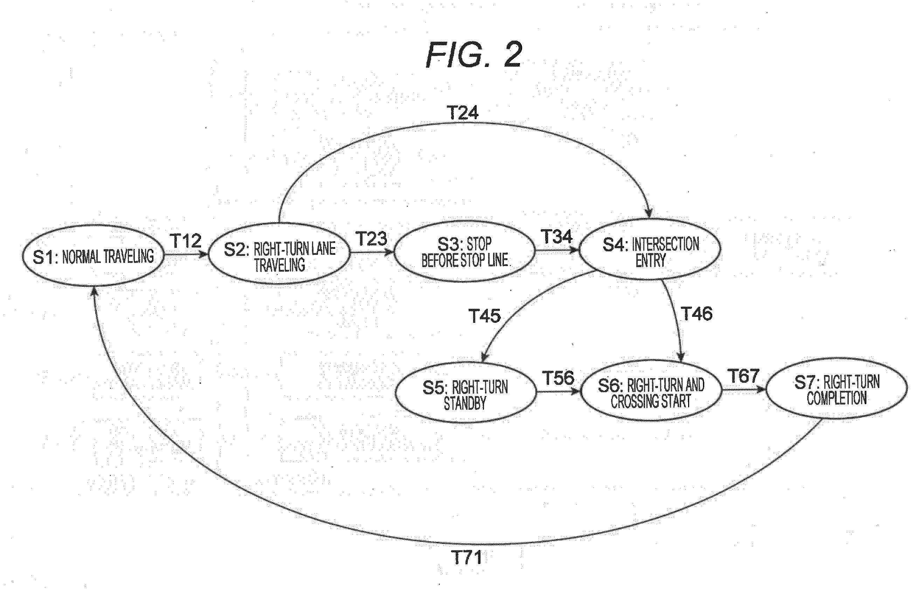

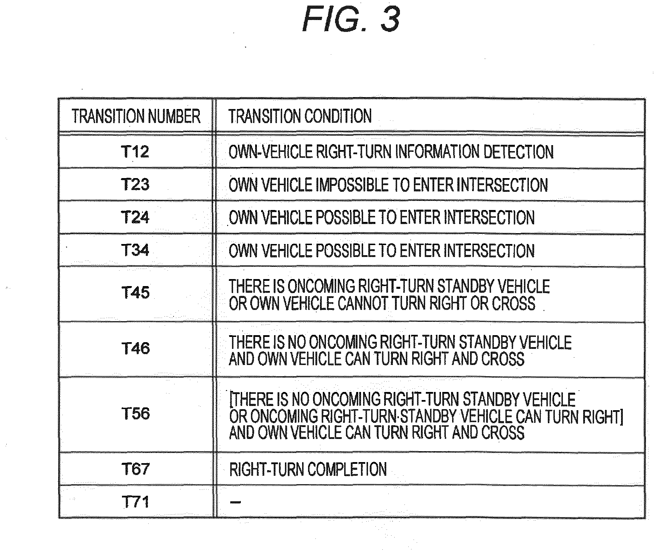

An example of a driving assistance method by the driving assistance device 100 according to the embodiment will be described by using the transition conditions of the state transition diagram of FIG. 2 and the state transition diagram of FIG. 3. Hereinafter, a description will be given about a case where the own vehicle C on which the driving assistance device 100 according to the embodiment is mounted generates a travel route to a destination set in the car navigation device by the user, and crosses the opposite lane and turns right at an intersection on the travel route. The following description is a case where the own vehicle C follows a traffic regulation that defines left-hand traffic, but - even when the traffic regulation defines right-hand traffic, the following description is similarly applicable to a case where the own vehicle C crosses the opposite lane and turns left.

A state S1 indicates a normal traveling state before entering the intersection. The state transitions to the right-turn lane traveling of a state S2 according to the transition condition T12.

The transition condition T12 is satisfied in a case where the right/left turn information detection unit 14 detects right-turn information indicating that the own vehicle C crosses the opposite lane (crosses the intersection) and turns right at the intersection after a predetermined time, and the own vehicle C enters the right-turn lane of the intersection based on the road information. The state transitions to the state S2 according to the transition condition T12.

The state S2 indicates the traveling state of the own vehicle C on the right-turn lane at the intersection. The state transitions to the stop before the stop line of a state S3 according to the transition condition T23. The state transitions to the intersection entry of a state S4 according to the transition condition T24.

The transition condition T23 is satisfied in a case where, based on the result of the intersection entry possibility determination unit 21, the traffic light at the intersection and the display of the signal displayed on the traffic light indicate that it is impossible to enter the intersection, or there is an obstacle in the traveling direction of own vehicle C.

The transition condition T24 is satisfied in a case where, based on the result of the intersection entry possibility determination unit 21, the traffic light at the intersection and the display of the signal displayed on the traffic light indicate that it is possible to enter the intersection, and there is no obstacle in the traveling direction of the own vehicle C.

The state S3 indicates a state in which the own vehicle C stops in front of the stop line on the right-turn lane at the intersection. The state transitions to the intersection entry of a state S4 according to the transition condition T34.

The transition condition T34 is satisfied in a case where, based on the result of the intersection entry possibility determination unit 21, the traffic light at the intersection and the display of the signal displayed on the traffic light indicate that it is possible to enter the intersection, and there is no obstacle in the traveling direction of the own vehicle C.

The state S4 indicates a state in which the own vehicle C enters the intersection without stopping in front of the stop line on the right-turn lane of the intersection. The state transitions to the right-turn standby of a state S5 according to the transition condition T45. The state transitions to the right-turn and crossing start of a state S6 according to the transition condition T46.

The transition condition T45 is satisfied in a case where, based on the results of the standby vehicle determination unit 22 and the own vehicle right/left turn execution determination unit 25, there is an oncoming right-turn standby vehicle (that is, there is a blind spot by the oncoming right-turn standby vehicle) or the own vehicle cannot turn right or cross.

The transition condition T46 is satisfied in a case where, based on the results of the standby vehicle determination unit 22 and the own vehicle right/left turn execution determination unit 25, there is no oncoming right-turn standby vehicle (that is, there is no blind spot by an oncoming right-turn standby vehicle), and the own vehicle can turn right and cross.

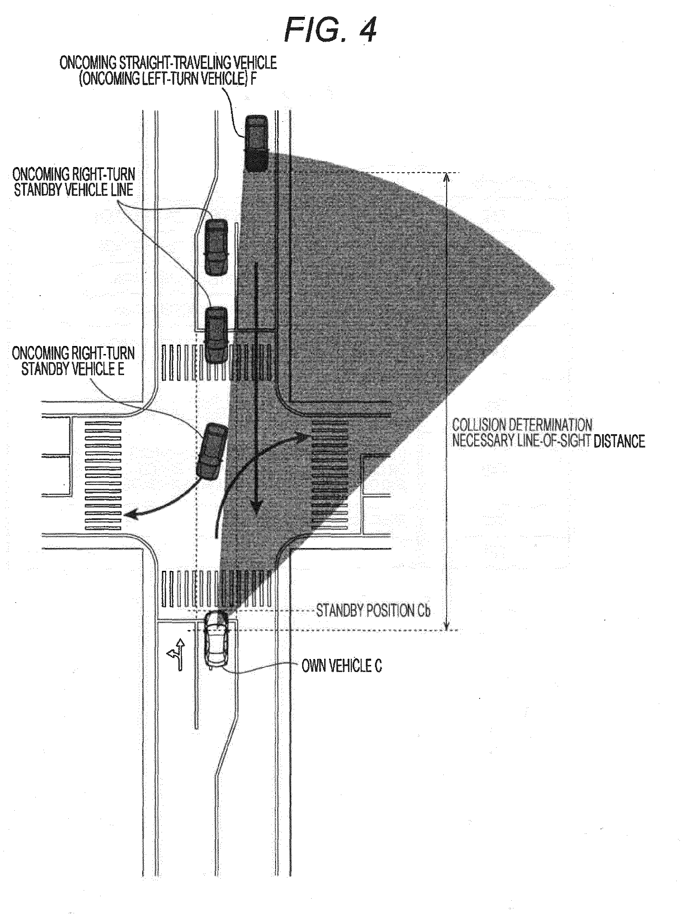

The state S5 indicates a state in which the own vehicle C is on standby at the right/left-turn standby position Cb in the intersection. The right/left-turn standby position Cb where the own vehicle C stands by is a position where it is possible to see a collision determination necessary line-of-sight distance used to calculate the possibility of collision between the own vehicle C and the oncoming straight-traveling vehicle or the oncoming left-turn vehicle F on the opposite lane in a case where the own vehicle C turns right and crosses the intersection on the opposite lane, and it is possible to determine whether or not the oncoming right-turn standby vehicle E can turn right by detecting the following vehicle D of the own vehicle C by a rear side sensor as the object detection unit 13. FIG. 4 illustrates an example of this state, which is a state in which the own vehicle C is on right-turn standby with the position in front of the crosswalk as the standby position Cb. At this time, the own vehicle C can see the collision determination necessary line-of-sight distance when the oncoming straight-traveling vehicle F on the opposite lane and the own vehicle C make a right/left turn. The state transitions to the right-turn and crossing start of the state S6 according to the transition condition T56.

The transition condition T56 is satisfied in a case where, based on the results of the standby vehicle determination unit 22, the own vehicle right/left turn execution determination unit 25, and the standby vehicle right/left turn execution determination unit 28, there is no oncoming right-turn standby vehicle and the own vehicle can turn right and cross, or when the oncoming right-turn standby vehicle can turn right and the own vehicle can turn right.

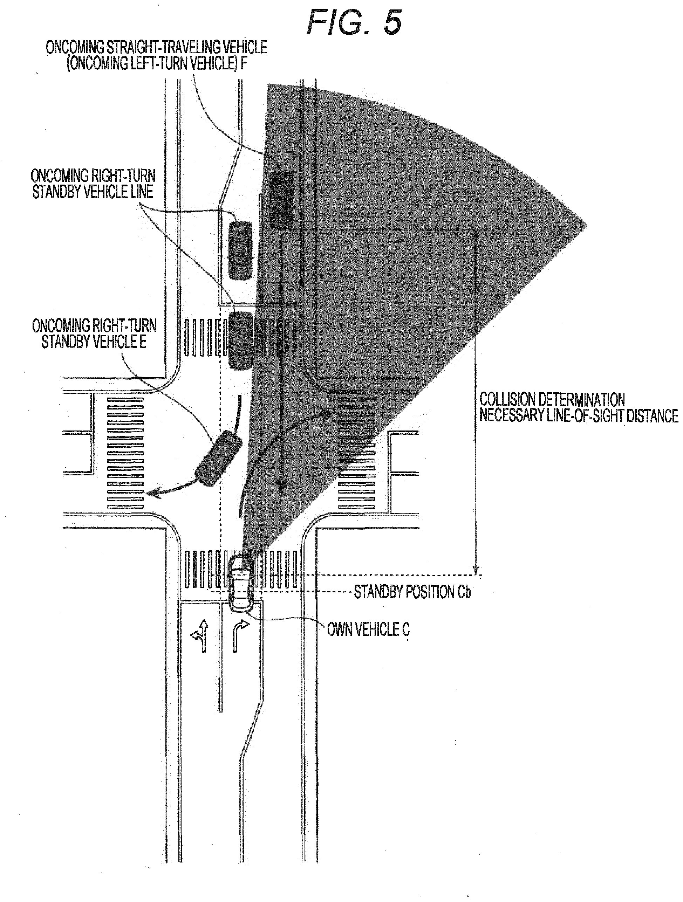

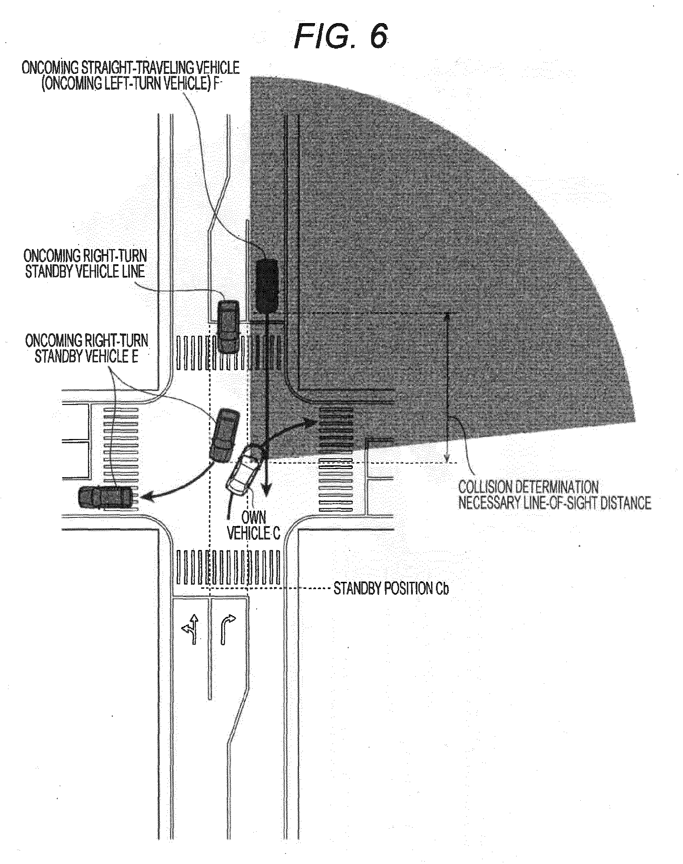

FIG. 5 illustrates a state in which the oncoming right-turn standby vehicle E can turn right and the own vehicle C has started to turn right and cross. As illustrated in FIG. 6, when the own vehicle C starts crossing the opposite lane before the following vehicle of the oncoming right-turn standby vehicle E forms a new blind spot, the own vehicle C can always see the surrounding situation in the traveling direction of the own vehicle C, such as the vehicle on the opposite lane and the crosswalk ahead of crossing, and thus can turn right or left at the intersection while securing safety.

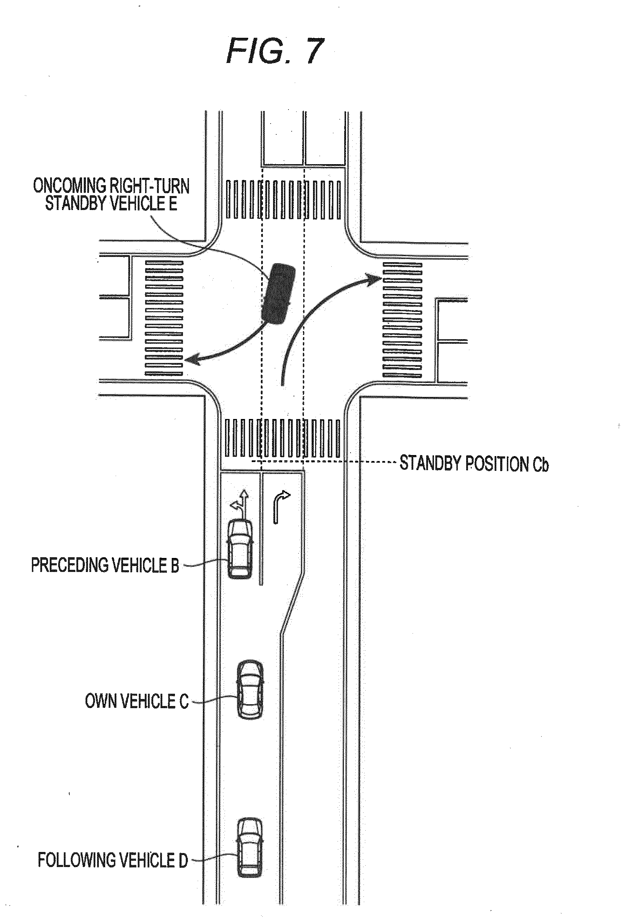

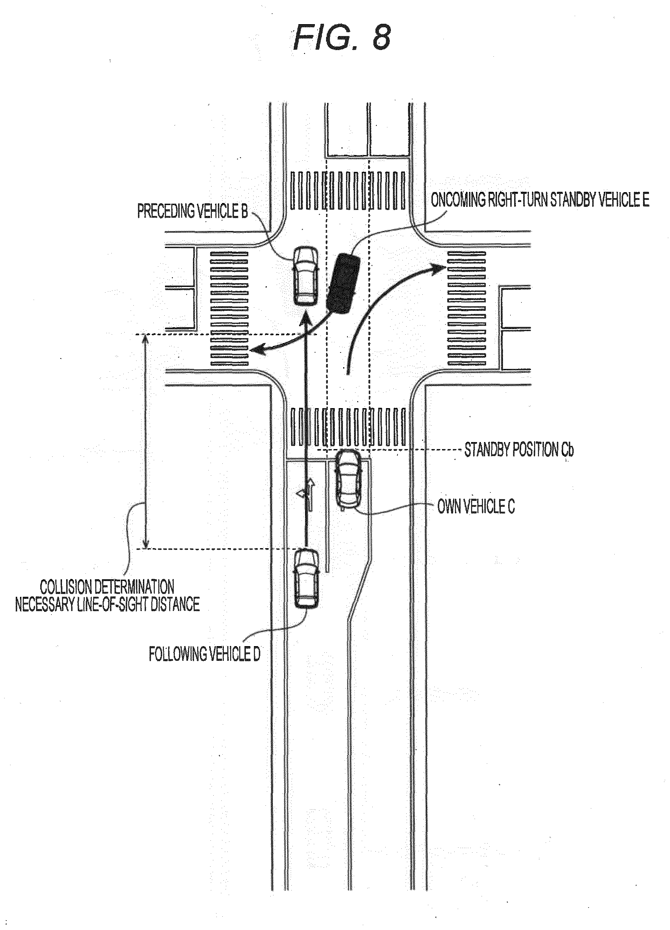

Here, an operation of the standby vehicle right/left turn execution determination unit 28 will be described. FIG. 7 illustrates a state in which the own vehicle C, a preceding vehicle B, and the following vehicle D enter the intersection. Here, a situation in which the preceding vehicle B travels straight through the intersection and the own vehicle C is on right-turn standby will be described with reference to FIG. 8. In FIG. 8, the oncoming right-turn standby vehicle E on the opposite lane is in the state of waiting for right turn and crossing until the preceding vehicle B passes. The own vehicle C determines, by the standby vehicle right/left turn execution determination unit 28, the possibility of collision between the oncoming right-turn standby vehicle E and the following vehicle D from the information on the position and speed of the following vehicle D by the rear side sensor at the own vehicle standby position Cb, the position of the oncoming right-turn standby vehicle E, and the like. Note that the right-turn track of the oncoming right-turn standby vehicle E is assumed based on the size of the intersection indicated by the road information. At this time, the standby position Cb of the own vehicle C is set to satisfy (secure) the collision determination necessary line-of-sight distance used to calculate the possibility of collision between the oncoming right-turn standby vehicle E and the following vehicle D. The collision determination necessary line-of-sight distance depends on a size of an intersection based on road information and a legal speed. For example, when it is determined based on the collision determination necessary line-of-sight distance or the like that there is no possibility of collision between the oncoming right-turn standby vehicle E and the following vehicle D of the own vehicle C, the standby vehicle right/left turn execution determination unit 28 can determine that the oncoming right-turn standby vehicle E can turn right and cross the intersection (from the standby position).

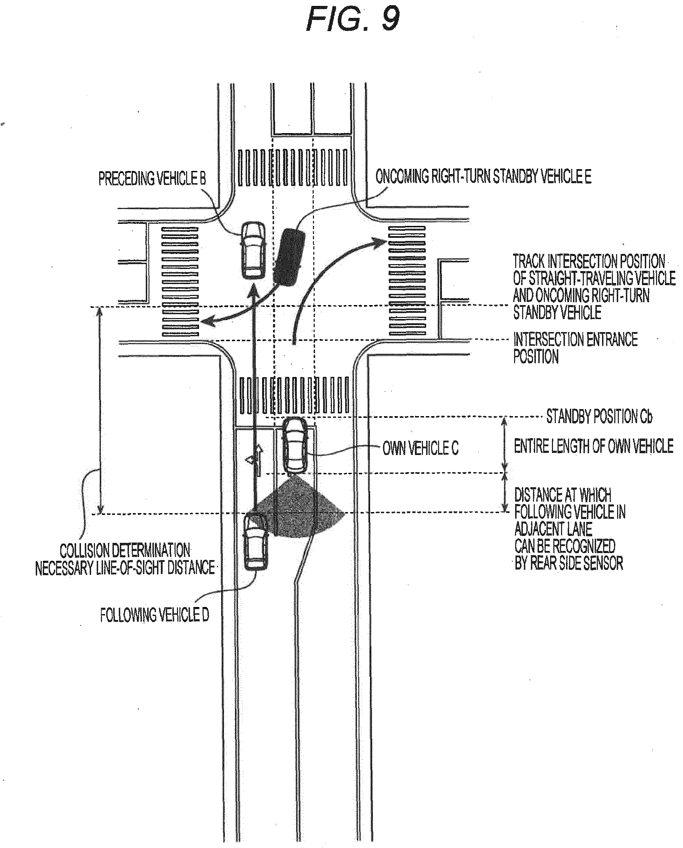

FIG. 9 illustrates a specific example of the collision determination necessary line-of-sight distance. The collision determination necessary line-of-sight distance in FIG. 8 can be expressed as the product of the standby vehicle right/left turn required time calculated by the standby vehicle right/left turn required time calculation unit 26 and the legal speed of the road of the straight-traveling vehicle (the preceding vehicle B or the following vehicle D). In addition, assuming that the rear side sensor is installed at the rear end of the vehicle, a distance from the front end of the vehicle to the rear side sensor attachment position can be regarded as the entire length of the own vehicle. At this time, when the track intersection position of the straight-traveling vehicle (the preceding vehicle B or the following vehicle D) and the oncoming right-turn standby vehicle E is set as a reference, the standby position Cb at which the own vehicle C stands by (the collision determination necessary line-of-sight distance of the oncoming right-turn standby vehicle E - the total length of the own vehicle - the distance at which the following vehicle in the adjacent lane can be recognized by the rear side sensor) before may be set.

Even when the rear side sensor has a short viewing distance like a vehicle peripheral camera, the combination of the rear side sensor and the front sensor can satisfy the collision determination necessary line-of-sight distance, so that the rear side sensor can be applied to a sensor configuration generally used for driving assistance.

Returning to FIGS. 2 and 3, the state S6 indicates a state in which the own vehicle C has started to turn right at the intersection and is performing a right-turn operation. The state transitions to the right-turn completion of a state S7 according to the transition condition T67.

The transition condition T67 is satisfied in a case where the own vehicle C reaches a position that the own vehicle C does not hinder the movement of an object (another vehicle) moving in the intersection after starting to turn right.

The state S7 indicates a state in which the own vehicle C has completed the right-turn operation in the intersection. The state transitions to the normal traveling of the state S1 according to the transition condition T71.

The state may transition to the state S1 immediately without the transition condition T71 having any particular condition.

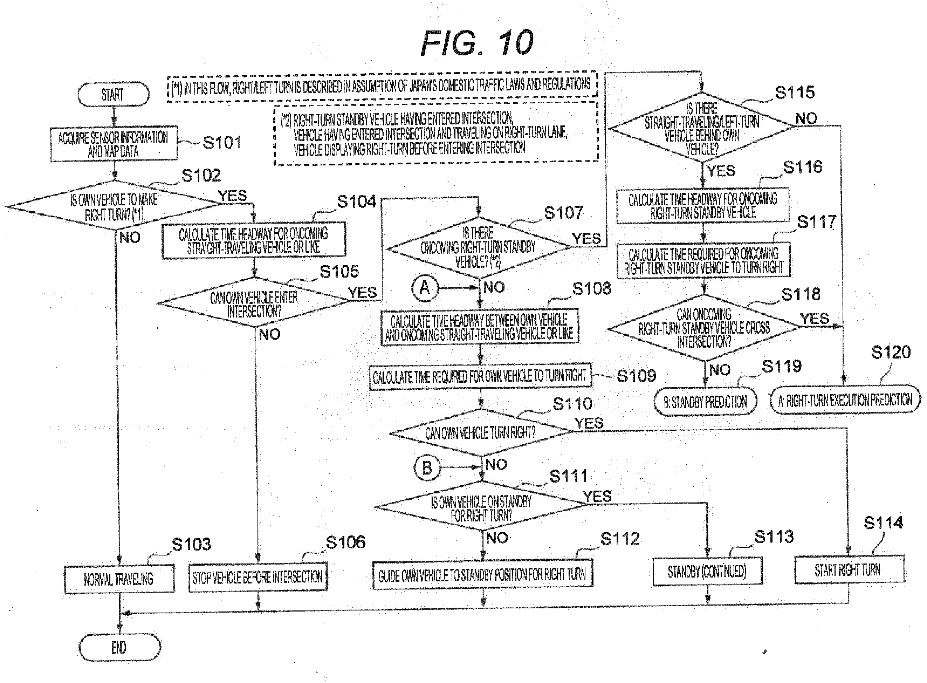

Next, an example of the driving assistance method by the driving assistance device 100 according to the embodiment will be described with reference to a flowchart of FIG. 10. Note that, similarly to the description using FIG. 2 and the like, a following description will be also given about a case where the own vehicle C on which the driving assistance device 100 according to the embodiment is mounted generates a travel route to a destination set in the car navigation device by the user, and crosses the opposite lane and turns right at an intersection on the travel route.

First, in step S101, the processing unit 2 acquires the current position of the own vehicle C in the road information and the detection result by the object detection unit 13 from the own vehicle position acquisition unit 12 at a predetermined sampling cycle.

In step S102, the right/left turn information detection unit 14 determines whether or not the right/left turn information indicating that the own vehicle C crosses the opposite lane (crosses the intersection) and turns right at the intersection after a predetermined time is detected. In a case where the right/left turn information is not detected, the processing proceeds to step S103, and in a case where the right/left turn information is detected, the processing proceeds to step S104. In step S103, the own vehicle C continues the normal traveling, and the processing returns to step S101.

In step S104, the own vehicle time headway calculation unit 24 calculates the time headway Ta for the oncoming straight-traveling vehicle or the oncoming left-turn vehicle F on the opposite lane based on the road information, the current position of the own vehicle C, and the detection result of the object detection unit 13.

In step S105, the intersection entry possibility determination unit 21 determines whether or not the own vehicle C can enter the intersection. For example, in the object detection unit 13 such as a camera that functions as a signal detection unit that detects a traffic light at an intersection and a signal displayed on the traffic light, when the display of the signal indicates that the own vehicle C can enter the intersection and there is no obstacle in front of the own vehicle C, the intersection entry possibility determination unit 21 determines that the own vehicle C can enter the intersection. In a case where the vehicle cannot enter the intersection, the processing proceeds to step S106, and in a case where the vehicle can enter the intersection, the processing proceeds to step S107.

In step S106, (the state transition management unit 29 of) the processing unit 2 guides the own vehicle C so that the own vehicle C stops immediately before the stop line that is a boundary of the intersection, and the processing returns step S101. In a case where the own vehicle C is an automatic driving vehicle, the processing unit 2 drives the own vehicle C to stop immediately before the stop line by controlling the vehicle control unit 3. In a case where the own vehicle C is a vehicle that travels according to the operation of the driver, the processing unit 2 guides the driver by voice, an image, or the like via the output unit 4 so that the own vehicle C stops immediately before the stop line. In addition, the processing unit 2 may stop the traveling own vehicle C immediately before the stop line by a brake.

In step S107, based on the detection result of the object detection unit 13 and the road information acquired by the road information acquisition unit 11, the standby vehicle determination unit 22 determines whether or not there is the standby vehicle E that stands by for right turn (specifically, crossing the traveling lane of the own vehicle from the opposite lane) from the opposite lane in the intersection indicated by the right/left turn information. Note that the standby vehicle E includes, for example, a right-turn standby vehicle having entered the intersection, a vehicle having entered the intersection and traveling on the right-turn lane, and a vehicle displaying (for example, blinker display) a right turn before entering the intersection. In a case where there is no standby vehicle E, the processing proceeds to step S108, and in a case where there is the standby vehicle E, the processing proceeds to step S115.

In step S108, the own vehicle time headway calculation unit 24 calculates the time headway Ta for the oncoming straight-traveling vehicle or the oncoming left-turn vehicle F on the opposite lane based on the road information, the current position of the own vehicle C, and the detection result of the object detection unit 13.

In step S109, based on the road information acquired by the road information acquisition unit 11, the own vehicle right/left turn required time calculation unit 23 calculates a required time (own vehicle right/left turn required time) Tb required for the own vehicle C to start and complete a right turn from a right/left-turn standby position Cb.

In step S110, the own vehicle right/left turn execution determination unit 25 determines whether or not the own vehicle C can cross the intersection from the standby position Cb and turn right based on the calculation result of the own vehicle right/left turn required time calculation unit 23, the calculation result of the own vehicle time headway calculation unit 24, the road information, the current position of the own vehicle C, and the detection result of the object detection unit 13 regarding a surrounding situation such as an obstacle around the own vehicle C and a pedestrian on a crosswalk ahead of crossing. In a case where the right turn is not possible, the processing proceeds to step S111, and in a case where the right turn is possible, the processing proceeds to step S114.

In step S111, the processing unit 2 determines whether or not the own vehicle C is on standby for right turn at the standby position Cb. In a case where the own vehicle is not on standby, the processing proceeds to step S112, and in a case where the own vehicle is on standby, the processing proceeds to step S113.

In step S112, (the state transition management unit 29 of) the processing unit 2 guides, the own vehicle C to the standby position Cb, and the processing returns to step S101. In a case where the own vehicle C is an automatic driving vehicle, the processing unit 2 drives the own vehicle C to stop at the standby position Cb by controlling the vehicle control unit 3. In a case where the own vehicle C is a vehicle that travels according to the operation of the driver, the processing unit 2 guides the driver via the output unit 4 so that the own vehicle C stops at the standby position Cb. In addition, the processing unit 2 may stop the traveling own vehicle C at the standby position Cb by a brake.

Here, the right-turn standby position Cb where the own vehicle C stands by is a position where it is possible to see a collision determination necessary line-of-sight distance used to calculate the possibility of collision between the own vehicle C and the oncoming straight-traveling vehicle or the oncoming left-turn vehicle F on the opposite lane in a case where the own vehicle C turns right and crosses the intersection on the opposite lane, and it is possible to detect the following vehicle D of the own vehicle C by the rear side sensor as the object detection unit 13 and determine whether or not the oncoming right-turn standby vehicle E can turn right, and a position where it is possible to satisfy (secure) the collision determination necessary line-of-sight distance used to calculate the possibility of collision between the oncoming right-turn standby vehicle E and the following vehicle D.

In step S113, (the state transition management unit 29 of) the processing unit 2 keeps the own vehicle C on standby at the standby position Cb.

In step S114, (the state transition management unit 29 of) the processing unit 2 guides the own vehicle C so that the own vehicle C starts to turn right, and the processing returns to step S101. In a case where the own vehicle C is an automatic driving vehicle, the processing unit 2 drives the own vehicle C to start turning right by controlling the vehicle control unit 3. In a case where the own vehicle C is a vehicle that travels according to the operation of the driver, the processing unit 2 guides the driver by voice, an image, or the like via the output unit 4 so that the own vehicle C starts turning right.

In step S115, (the standby vehicle right/left turn execution determination unit 28 of) the processing unit 2 determines whether or not there is the following vehicle D behind the own vehicle based on the detection result of the object detection unit 13 and the road information acquired by the road information acquisition unit 11. Note that the following vehicle D of the own vehicle C includes, for example, a straight-traveling vehicle from the rear side of the own vehicle C and a left-turn vehicle turning left from the rear side of the own vehicle C. In a case where there is the following vehicle D, the processing proceeds to step S116, and in a case where there is no following vehicle D, the processing proceeds to step S120.

In step S116, the standby vehicle time headway calculation unit 27 calculates the time headway Td of the standby vehicle E with respect to the following vehicle D of the own vehicle. C based on the current position of the own vehicle C, the position of the standby vehicle E based on the detection result of the object detection unit 13, and the position and speed of the following vehicle D of the own vehicle C detected by the rear side sensor.

In step S117, the standby vehicle right/left turn required time calculation unit 26 calculates a required time (standby vehicle right/left turn required time) Te required for the oncoming right-turn standby vehicle E to start and complete a right turn from the right/left-turn standby position based on the road information acquired by the road information acquisition unit 11. At this time, the standby vehicle right/left turn required time calculation unit 26 calculates the required time Te assuming the track of the right/left turn of the standby vehicle E based on the size of the intersection indicated by the road information.

In step S118, the standby vehicle right/left turn execution determination unit 28 determines whether or not the standby vehicle E can cross the intersection from the standby position and turn right based on the calculation result of the standby vehicle right/left turn required time calculation unit 26, the calculation result of the standby vehicle time headway calculation unit 27, the road information, the current position of the standby vehicle E, and the detection result of the object detection unit 13 regarding a surrounding situation such as an obstacle around the standby vehicle E and a pedestrian on a crosswalk ahead of crossing. In a case where the right turn is impossible, the processing proceeds to step S119, and the processing proceeds to Sill of standby prediction (without performing S110 of the own vehicle right turn possibility determination). In a case where the right turn is possible, the processing proceeds to step S120, and the processing proceeds to S108 of the right-turn execution prediction.

That is, in a case where there is no following vehicle D behind the own vehicle or a case where there is the following vehicle D behind the own vehicle but the standby vehicle E can cross the intersection and turn right from the standby position, the processing proceeds to step S120, and the processing proceeds to step S108 of the right-turn execution prediction. In a case where there is the following vehicle D behind the own vehicle and the standby vehicle E cannot cross the intersection and turn right from the standby position, the processing proceeds to step S119, and the processing proceeds to S111 of the standby prediction (without performing S110 of the own vehicle right turn possibility determination).

As described above, the driving assistance device 100 according to the embodiment determines the presence of the oncoming right/left-turn standby vehicle E, on the opposite lane, standing by for right/left turn crossing the intersection, assumes the track of right/left turn of the oncoming right/left-turn standby vehicle E based on the size of the intersection, causes the own vehicle C to stand by at the standby position Cb which allows detecting the following vehicle D of the own vehicle C by the rear side sensor and determining whether or not the oncoming right/left-turn standby vehicle E is capable of a right/left turn, and starts the right/left turn of the own vehicle C in a case where it is determined that the oncoming right/left-turn standby vehicle E crosses the intersection and turns right or left, and the own vehicle C is capable of crossing the intersection and turning right or left.

In this way, according to the driving assistance device 100 according to the embodiment, it is possible to ensure safety in a state where the opposite lane is always seen from the time of entering the intersection to the start of the execution of the right/left turn and perform a right/left turn at an intersection without missing a right/left turn execution opportunity with a low-cost sensor configuration for driving assistance, for example.

Note that the present invention is not limited to the above-described embodiment, and various modifications are included. For example, the above-described embodiment has been described in detail for easy understanding of the invention and is not necessarily limited to those having all the described configurations.

Each of the above-described configurations, functions, processing units, processing means, and the like may be realized by hardware by designing a part or all of them with, for example, an integrated circuit. In addition, each of the above-described configurations, functions, and the like may be realized by software by a processor interpreting and executing a program for realizing each function. Information such as a program, a table, and a file for realizing each function can be stored in a memory, a storage device such as a hard disk and a solid state drive (SSD), or a recording medium such as an IC card, an SD card, or a DVD.

Control lines and information lines are described in consideration of necessity for the description, and all control lines and information lines in the product are not necessarily described. It may be considered that almost all the components are connected to each other in actual.

According to the present invention, it is possible to provide a driving assistance device: capable of ensuring safety by allowing an opposite lane to be always seen from a time of entering an intersection to a start of executing a right/left turn and performing the right/left turn at the intersection without missing a right/left turn execution opportunity, for example, with a low-cost sensor configuration for driving assistance.

### Reference Signs List

- 1: information supply unit
- 2: processing unit
- 3: vehicle control unit
- 4: output unit
- 11: road information acquisition unit
- 12: own vehicle position acquisition unit
- 13: object detection unit (rear side sensor)
- 14: right/left turn information detection unit
- 21: intersection entry possibility determination unit
- 22: standby vehicle determination unit
- 23: own vehicle right/left turn required time calculation unit
- 24: own vehicle time headway calculation unit
- 25: own vehicle right/left turn execution determination unit
- 26: standby vehicle right/left turn required time calculation unit
- 27: standby vehicle time headway calculation unit
- 28: standby vehicle right/left turn execution determination unit
- 29: state transition management unit
- 100: driving assistance device
- B: preceding vehicle
- C: own vehicle
- Cb: standby, position.
- D: following vehicle
- E: oncoming right/left-turn standby vehicle
- F: oncoming straight-traveling vehicle or oncoming right/left-turn vehicle

## Claims

1. A driving assistance device wherein
presence of an oncoming right/left-turn standby vehicle, on an opposite lane, standing by for a right/left turn crossingan intersection is determined,
a track of the right/left turn of the oncoming right/left-turn standby vehicle is assumed based on a size of the intersection,
an own vehicle is caused to stand by at a standby position which allows detecting a following vehicle of the own vehicle by a rear side sensor and determining whether or not the oncoming right/left-turn standby vehicle is capable of a right/left turn, and
in a case where it is determined that the oncoming right/left-turn standby vehicle crosses the intersection and turns right or left, and the own vehicle is capable of crossing the intersection and turning right or left, a right/left turn of the own vehicle is started.

2. The driving assistance device according to claim 1, wherein
the standby position is a position which allows satisfying a collision determination necessary line-of-sight distance used to calculate a possibility of collision between the following vehicle of the own vehicle and the oncoming right/left-turn standby vehicle.

3. The driving assistance device according to claim 1, wherein
the standby position is a position which allows seeing a collision determination necessary line-of-sight distance used to calculate a collision possibility between the own vehicle and an oncoming straight-traveling vehicle or an oncoming right/left-turn vehicle on the opposite lane.

4. The driving assistance device according to claim 1, wherein
whether or not the oncoming right/left-turn standby vehicle is capable of crossing the intersection and turning right or left is determined based on at least one of a standby vehicle right/left turn required time required for the oncoming right/left-turn standby vehicle to turn right or left, a standby vehicle time headway of the oncoming right/left-turn standby vehicle with respect to the following vehicle of the own vehicle, road information, a current position of the oncoming right/left-turn standby vehicle, or a surrounding situation of a crosswalk around or ahead of the oncoming right/left-turn standby vehicle.

5. The driving assistance device according to claim 1, wherein
when it is determined that there is no possibility of collision between the oncoming right/left-turn standby vehicle and the following vehicle of the own vehicle, it is determined that the oncoming right/left-turn standby vehicle is capable of crossing the intersection.

6. The driving assistance device according to claim 1, wherein
whether or not the own vehicle is capable of crossing the intersection and turning right or left is determined based on at least one of an own vehicle right/left turn required time required for the own vehicle to turn right or left, an own vehicle time headway of the own vehicle with respect to an oncoming straight-traveling vehicle or an oncoming right/left-turn vehicle on the opposite lane, road information, a current position of the own vehicle, or a surrounding situation of a crosswalk around or ahead of the own vehicle.

7. The driving assistance device according to claim 1, wherein
the oncoming right/left-turn standby vehicle includes a right/left-turn standby vehicle having entered the intersection, a vehicle having entered the intersection and traveling on a right/left-turn lane, or a vehicle displaying a right/left turn before entering the intersection.

8. The driving assistance device according to claim 1, wherein
the following vehicle of the own vehicle includes a straight-traveling vehicle from a rear side of the own vehicle or a vehicle that turns in a direction opposite to the own vehicle from the rear side of the own vehicle.
